(19)

Europäisches Patentamt
European Patent Office
Office européen des brevets

(11) **EP 4 527 863 A1**

(12) **EUROPEAN PATENT APPLICATION**
published in accordance with Art. 153(4) EPC

(43) Date of publication:
**26.03.2025 Bulletin 2025/13**

(21) Application number: 23807654.1

(22) Date of filing: **16.05.2023**

(51) International Patent Classification (IPC):
**C08F 222/30** (2006.01)    **C08F 2/40** (2006.01)

(52) Cooperative Patent Classification (CPC):
**C08F 2/40; C08F 222/30**

(86) International application number:
**PCT/JP2023/018355**

(87) International publication number:
**WO 2023/224053 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.05.2022   JP 2022083349**

(71) Applicant: **Kuraray Co., Ltd.
Kurashiki-shi, Okayama 710-0801 (JP)**

(72) Inventors:
• **INATOMI, Atsushi
  Tsukuba-shi, Ibaraki 305-0841 (JP)**
• **HOSOKI, Tomoya
  Tokyo 100-0004 (JP)**
• **NAKAHARA, Atsuhiro
  Tsukuba-shi, Ibaraki 305-0841 (JP)**

(74) Representative: **Müller-Boré & Partner
Patentanwälte PartG mbB
Friedenheimer Brücke 21
80639 München (DE)**

(54) **RESIN COMPOSITION, CURED PRODUCT, LAMINATE, AND METHOD FOR PRODUCING LAMINATE**

(57)    A resin composition exhibiting excellent adhesive strength when used as an adhesive and a cured product using the same are provided. Further, a laminate using the cured product and a method for producing the laminate are provided.

A resin composition including: 1,1-dicyanoethylene (A), a polymerizable monomer (B) represented by general formula (I) below, and a polymerizable monomer (C) represented by general formula (II) below:

$$CH_2=CR^1R^2 \qquad (I)$$

$$CHR^6=CR^7R^8 \qquad (II)$$

EP 4 527 863 A1

**Description**

Technical Field

The present invention relates to a resin composition containing 1,1-dicyanoethylene and a specific polymerizable monomer, a cured product, a laminate, and a method for producing the laminate.

Background Art

Monomers such as 2-cyanoacrylic acid alkyl ester, 2-cyanopentadienoic acid alkyl ester, and methylidenemalonic acid dialkyl ester are used in resin compositions of fast-curing adhesives because of their excellent reactivity. A resin composition containing such a monomer has fast curability, but has had a problem of low adhesiveness to an adherend body made of a polyolefin material. As a method for alleviating this problem, for example, PTL 1 proposes a method of performing a pretreatment such as a primer treatment before applying a resin composition to an adherend body. Further, PTL 2 proposes a method for improving fast curability and adhesive strength by copolymerizing the above monomer with another monomer.

Citation List

Patent Literature

PTL 1: JP2003-041200A
PTL 2: JPH01-103614A

Summary of Invention

Technical Problem

In the method described in PTL 1, since it is necessary to perform a pretreatment on the adherend body, there is a problem that the production efficiency is reduced, and further, the improvement of the adhesiveness is not sufficient. Further, in the method described in PTL 2, the adhesiveness is not sufficient, and improvement has been desired.
An object of the present invention is to provide a resin composition exhibiting excellent adhesive strength when used as an adhesive and a cured product using the same. Further, another object is to provide a laminate using the cured product and a method for producing the laminate.

Solution to Problem

As a result of studies by the present inventors, it has been found that the monomer having high reactivity preferentially forms a homopolymer due to its reactivity and is usually difficult to copolymerize with other monomers. Therefore, as a result of studies on copolymerizable monomers, it has been found that when 1,1-dicyanoethylene which has a low LUMO energy level and which easily forms a charge transfer complex with the monomer is used, copolymerization by anionic polymerization easily proceeds. As a result of further studies, it has been found that by a combination of 1,1-dicyanoethylene and a specific monomer, a resin composition having excellent adhesiveness to a polyolefin base material to which a conventional adhesive has poor adhesiveness can be obtained, and the present invention has been completed.
That is, the present invention provides the following [1] to [9].

[1] A resin composition including: 1,1-dicyanoethylene (A), a polymerizable monomer (B) represented by general formula (I) below, and a polymerizable monomer (C) represented by general formula (II) below:

$$CH_2=CR^1R^2 \qquad (I)$$

$$CHR^6=CR^7R^8 \qquad (II)$$

in which, in the general formula (I), $R^1$ represents one or more kinds selected from a hydrogen atom, an alkyl group, a cycloalkyl group, an aryl group, an alkoxy group, and a halogen atom,

R$^2$ represents one or more kinds selected from a hydrogen atom, an alkyl group, an alkenyl group, a cycloalkyl group, an aryl group, an alkoxy group, a carboxy group, an ester group represented by -COOR$^3$, in which R$^3$ represents an alkyl group having 1 to 12 carbon atoms, an acid anhydride group, an acyl group represented by -COR$^4$, in which R$^4$ represents an alkyl group having 1 to 12 carbon atoms, an acyloxy group represented by -OCOR$^5$, in which R$^5$ represents an alkyl group having 1 to 12 carbon atoms, a halogen atom, and a haloalkyl group;

further, in the general formula (II), R$^6$ represents one or more kinds selected from a hydrogen atom, an alkyl group, an alkenyl group, and an alkoxy group;

R$^7$ represents one or more kinds selected from a cyano group, a carboxy group, an ester group represented by -COOR$^9$, in which R$^9$ represents an alkyl group having 1 to 10 carbon atoms or an aryl group having 6 to 20 carbon atoms, and an acid anhydride group; and

R$^8$ represents one or more kinds selected from a carboxy group, an ester group represented by -COOR$^{10}$, in which R$^{10}$ represents an alkyl group having 1 to 10 carbon atoms, an aryl group having 6 to 20 carbon atoms, or a divalent or higher-valent linking group, and an acid anhydride group.

[2] The resin composition according to the [1], in which an energy difference between a LUMO energy level of the 1,1-dicyanoethylene (A) and a HOMO energy level of the polymerizable monomer (B) is less than 4.40 eV.
[3] The resin composition according to the [1] or [2], in which the polymerizable monomer (B) is one or more kinds selected from ethylene, propylene, butadiene, isobutylene, isoprene, 1-hexene, 1-octene, vinyl acetate, styrene, methyl methacrylate, and dodecyl methacrylate.
[4] The resin composition according to any of the [1] to [3], in which the polymerizable monomer (C) is one or more kinds selected from 2-cyanoacrylic acid alkyl ester, 2-cyanopentadienoic acid alkyl ester, and methylidenemalonic acid dialkyl ester.
[5] The resin composition according to any of the [1] to [4], in which a content of the 1,1-dicyanoethylene (A) in a total amount of the resin composition is 1% by mass or more and 80% by mass or less,

a content of the polymerizable monomer (B) is 1% by mass or more and 80% by mass or less, and
a content of the polymerizable monomer (C) is 19% by mass or more and 98% by mass or less.

[6] The resin composition according to any of the [1] to [5], further including a Bronsted acidic compound.
[7] A cured product obtained by curing the resin composition according to any of the [1] to [6] with a Lewis basic compound.
[8] A laminate including a layer containing the cured product according to the [7].
[9] A method for producing a laminate, the method including a bonding step of bonding a first adherend body and a second adherend body with the resin composition according to any of the [1] to [6].

Advantageous Effects of Invention

According to the present invention, it is possible to provide a resin composition exhibiting excellent adhesive strength when used as an adhesive, and a cured product using the same. In addition, a laminate using the cured product and a method for producing the laminate can be provided.

Description of Embodiments

[Resin Composition]

The resin composition of the present invention includes 1,1-dicyanoethylene (A), a polymerizable monomer (B) represented by the following general formula (I), and a polymerizable monomer (C) represented by the following general formula (II).

$$CH_2=CR^1R^2 \qquad (I)$$

$$CHR^6=CR^7R^8 \qquad (II)$$

(In the general formula (I), R$^1$ represents one or more kinds selected from a hydrogen atom, an alkyl group, a cycloalkyl group, an aryl group, an alkoxy group, and a halogen atom,

R$^2$ represents one or more kinds selected from a hydrogen atom, an alkyl group, an alkenyl group, a cycloalkyl group, an aryl group, an alkoxy group, a carboxy group, an ester group represented by -COOR$^3$ (R$^3$ represents an alkyl group having 1 to 12 carbon atoms), an acid anhydride group, an acyl group represented by -COR$^4$ (R$^4$ represents an alkyl group having 1 to 12 carbon atoms), an acyloxy group represented by -OCOR$^5$(R$^5$ represents an alkyl group having 1 to 12 carbon atoms), a halogen atom, and a haloalkyl group;

further, in the general formula (II), R$^6$ represents one or more kinds selected from a hydrogen atom, an alkyl group, an alkenyl group, and an alkoxy group;

R$^7$ represents one or more kinds selected from a cyano group, a carboxy group, an ester group represented by -COOR$^9$ (R$^9$ represents an alkyl group having 1 to 10 carbon atoms or an aryl group having 6 to 20 carbon atoms), and an acid anhydride group;

R$^8$ represents one or more kinds selected from a carboxy group, an ester group represented by -COOR$^{10}$ (R$^{10}$ represents an alkyl group having 1 to 10 carbon atoms, an aryl group having 6 to 20 carbon atoms, or a divalent or higher-valent linking group), and an acid anhydride group).

<1,1-Dicyanoethylene (A)>

In the resin composition of the present invention, 1,1-dicyanoethylene (A) is used. Since 1,1-dicyanoethylene (A) easily forms a charge transfer complex with the polymerizable monomer (B) described later, a copolymer made of 1,1-dicyanoethylene (A), a polymerizable monomer (B), and a polymerizable monomer (C) is easily obtained.

1,1-dicyanoethylene can be obtained by a production method described in J. Am. Chem. Soc., 1989, 111, 9078-9081, or US2,476,270B.

<Polymerizable Monomer (B)>

The polymerizable monomer (B) is a monomer represented by the following general formula (I).

$$CH_2=CR^1R^2 \qquad (I)$$

In the general formula (I), R$^1$ represents one or more kinds selected from a hydrogen atom, an alkyl group, a cycloalkyl group, an aryl group, an alkoxy group, and a halogen atom.

The alkyl group of R$^1$ is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The cycloalkyl group of R$^1$ is preferably a cycloalkyl group having 3 to 12 carbon atoms, and examples thereof include a cyclopropyl group, a cyclobutyl group, a cyclopentyl group, and a cyclohexyl group.

The aryl group of R$^1$ is preferably an aryl group having 6 to 20 carbon atoms, and examples thereof include a phenyl group, a tolyl group, a xylyl group, and a naphthyl group.

The alkoxy group of R$^1$ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

Examples of the halogen atom of R$^1$ include a fluorine atom, a chlorine atom, a bromine atom, and an iodine atom.

Among these, from the viewpoint of improving adhesiveness, R$^1$ is preferably a hydrogen atom and an alkyl group having 1 to 6 carbon atoms, more preferably a hydrogen atom and an alkyl group having 1 to 4 carbon atoms, and further more preferably a hydrogen atoms and a methyl group.

In the general formula (I), R$^2$ represents one or more kinds selected from a hydrogen atom, an alkyl group, an alkenyl group, a cycloalkyl group, an aryl group, an alkoxy group, a carboxy group, an ester group represented by -COOR$^3$ (R$^3$ represents an alkyl group having 1 to 12 carbon atoms), an acid anhydride group, an acyl group represented by -COR$^4$ (R$^4$ represents an alkyl group having 1 to 12 carbon atoms), an acyloxy group represented by - OCOR$^5$ (R$^5$ represents an alkyl group having 1 to 12 carbon atoms), a halogen atom, and a haloalkyl group.

The alkyl group of R$^2$ is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The alkenyl group represented by R$^2$ is preferably an alkenyl group having 2 to 12 carbon atoms, and examples thereof include a vinyl group, an allyl group, a propenyl group, an isopropenyl group, a butenyl group, an isobutenyl group, a pentenyl group, a prenyl group, a hexenyl group (such as a cis-3-hexenyl group), and a cyclohexenyl group.

The cycloalkyl group of R$^2$ is preferably a cycloalkyl group having 3 to 12 carbon atoms, and examples thereof include a cyclopropyl group, a cyclobutyl group, a cyclopentyl group, and a cyclohexyl group.

The aryl group of R$^2$ is preferably an aryl group having 6 to 20 carbon atoms, and examples thereof include a phenyl group, a tolyl group, a xylyl group, and a naphthyl group.

The alkoxy group of $R^2$ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

$R^2$ can be an ester group represented by -COOR$^3$, and $R^3$ represents an alkyl group having 1 to 12 carbon atoms. Examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a heptyl group, an octyl group, a decyl group, and a dodecyl group.

Examples of the acid anhydride group of $R^2$ include an acid anhydride group derived from phthalic acid anhydride, maleic acid anhydride, trimellitic acid anhydride, pyromellitic acid anhydride, hexahydrophthalic acid anhydride, tetrahydrophthalic acid anhydride, methylnadic acid anhydride, nadic acid anhydride, glutaric acid anhydride, dimethylglutaric acid anhydride, diethylglutaric acid anhydride, succinic acid anhydride, methylhexahydrophthalic acid anhydride, and methyltetrahydrophthalic acid anhydride.

$R^2$ can be an acyl represented by -COR$^4$, and $R^4$ represents an alkyl having 1 to 12 carbon atoms. Examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

$R^2$ can be an acyloxy group represented by -OCOR$^5$, and $R^5$ represents an alkyl group having 1 to 12 carbon atoms. Examples thereof include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

Examples of the halogen atom of $R^2$ include a fluorine atom, a chlorine atom, a bromine atom, and an iodine atom.

In addition, the haloalkyl group of $R^2$ is preferably a haloalkyl group having 1 to 12 carbon atoms, and more preferably a haloalkyl group having 1 to 6 carbon atoms. Examples of the halogen atom constituting the haloalkyl group include a fluorine atom, a chlorine atom, a bromine atom, and an iodine atom.

Among these, from the viewpoint of improving adhesiveness, $R^2$ is preferably one kind selected from a hydrogen atom, an alkyl group, an alkenyl group, an aryl group, an ester group represented by -COOR$^3$, and an acyloxy group represented by -OCOR$^5$, and more preferably an alkyl group having 1 to 6 carbon atoms, an aryl group having 6 to 10 carbon atoms, and an ester group represented by -COOR$^3$ (in this case, $R^3$ represents an alkyl group having 8 to 12 carbon atoms), and an acyloxy group represented by -OCOR$^5$ (in this case, $R^5$ represents an alkyl group having 1 to 6 carbon atoms).

More specifically, the polymerizable monomer (B) is preferably one or more kinds selected from ethylene, propylene, butadiene, isobutylene, isoprene, 1-hexene, 1-octene, vinyl acetate, styrene, methyl methacrylate, and dodecyl methacrylate, from the viewpoint of improving adhesiveness. In particular, when the adherend body described later is a polyolefin base material, 1-hexene or 1-octene is preferably used as the polymerizable monomer (B). By using these monomers, stronger adhesion can be achieved.

In the present invention, an energy difference between a LUMO energy level of the 1,1-dicyanoethylene (A) and a HOMO energy level of the polymerizable monomer (B) is preferably less than 4.40 eV, more preferably 4.00 eV or less, and further more preferably 3.90 eV or less. When the energy difference is equal to or less than the upper limit value, the 1,1-dicyanoethylene (A) and the polymerizable monomer (B) easily form a charge transfer complex.

Note that when two or more kinds of polymerizable monomers (B) are used in the present invention, at least one kind thereof can satisfy the energy level difference, but it is more preferable that all the polymerizable monomers (B) satisfy the energy level difference.

For the formation of the charge transfer complex, the electron energy levels of the bonding orbital and the antibonding orbital of the vinyl group among the vacuum levels of the electron energy levels are important. These often correspond to the "highest occupied molecular orbital" (HOMO: highest occupied molecular orbital) and the "lowest unoccupied molecular orbital" (LUMO: lowest unoccupied molecular orbital), respectively, although in some cases the "level one below the HOMO (HOMO-1)" is the bonding orbital of the vinyl group. The density function theory (hereinafter referred to as DFT (Density Function Theory)) is well established for calculating the electronic energy level of a molecular orbital, and the energy level of HOMO-1/HOMO/LUMO can be estimated by this method.

The values of HOMO-1/HOMO/LUMO levels of the respective compounds used in the present invention were calculated by a quantum chemical calculation program, Gaussian 16W (Gaussian 16, Revision A.03, M. J. Frisch, G. W. Trucks, H. B. Schlegel, G. E. Scuseria, M. A. Robb, J. R. Cheeseman, G. Scalmani, V. Barone, G. A. Petersson, H. Nakatsuji, X. Li, M. Caricato, A. V. Marenich, J. Bloino, B. G. Janesko, R. Gomperts, B. Mennucci, H. P. Hratchian, J. V. Ortiz, A. F. Izmaylov, J. L. Sonnenberg, D. Williams-Young, F. Ding, F. Lipparini, F. Egidi, J. Goings, B. Peng, A. Petrone, T. Henderson, D. Ranasinghe, V. G. Zakrzewski, J. Gao, N. Rega, G. Zheng, W. Liang, M. Hada, M. Ehara, K. Toyota, R. Fukuda, J. Hasegawa, M. Ishida, T. Nakajima, Y. Honda, O. Kitao, H. Nakai, T. Vreven, K. Throssell, J. A. Montgomery, Jr., J. E. Peralta, F. Ogliaro, M. J. Bearpark, J. J. Heyd, E. N. Brothers, K. N. Kudin, V. N. Staroverov, T. A. Keith, R. Kobayashi, J. Normand, K. Raghavachari, A. P. Rendell, J. C. Burant, S. S. Iyengar, J. Tomasi, M. Cossi, J. M. Millam, M. Klene, C. Adamo, R. Cammi, J. W. Ochterski, R. L. Martin, K. Morokuma, O. Farkas, J. B. Foresman, and D. J. Fox, Gaussian, Inc.,

Wallingford CT, 2016.), which has been currently widely used.

DFT was used as a calculation method, and B3LYP was used as a functional. The structure was optimized using 6-31+G (d, p) as a basis function, and the energy levels of HOMO-1, HOMO, and LUMO were calculated by performing single-point energy calculation on the structure having the minimum formation energy using 6-311++G (3d, 2p) as a basis function.

The method for producing the polymerizable monomer (B) is not particularly limited, and it can be produced by a known method alone or in combination. Further, as the polymerizable monomer (B), a commercially available product can also be used, and examples thereof include 1-hexene (manufactured by Tokyo Chemical Industry Co., Ltd.), dodecyl methacrylate (manufactured by Tokyo Chemical Industry Co., Ltd.), vinyl acetate (manufactured by Tokyo Chemical Industry Co., Ltd.), and styrene (manufactured by Tokyo Chemical Industry Co., Ltd.).

<Polymerizable Monomer (C)>

The polymerizable monomer (C) is a monomer represented by the following general formula (II). In the present invention, by using the polymerizable monomer (C) together with the 1,1-dicyanoethylene (A) and the polymerizable monomer (B), a resin composition exhibiting excellent adhesiveness even to a polyolefin base material or the like can be obtained.

$$CHR^6=CR^7R^8 \qquad (II)$$

In the general formula (II), $R^6$ represents one or more kinds selected from a hydrogen atom, an alkyl group, an alkenyl group, and an alkoxy group.

The alkyl group of $R^6$ is preferably an alkyl group having 1 to 12 carbon atoms, and examples thereof include a methyl group, an ethyl group, an n-propyl group, an isopropyl group, an n-butyl group, an isobutyl group, a sec-butyl group, a tert-butyl group, an n-pentyl group, an isopentyl group, a neopentyl group, and an n-hexyl group.

The alkenyl group of $R^6$ is preferably an alkenyl group having 2 to 12 carbon atoms, and examples thereof include a vinyl group, an allyl group, a propenyl group, an isopropenyl group, a butenyl group, an isobutenyl group, a pentenyl group, a prenyl group, a hexenyl group (such as a cis-3-hexenyl group), and a cyclohexenyl group.

The alkoxy group of $R^6$ is preferably an alkoxy group having 1 to 10 carbon atoms, and examples thereof include a methoxy group, an ethoxy group, an n-propoxy group, an isopropoxy group, an n-butoxy group, an isobutoxy group, a sec-butoxy group, and a tert-butoxy group.

Among these, $R^6$ is preferably a hydrogen atom, an alkyl group, or an alkenyl group, and more preferably a hydrogen atom.

In the general formula (II), $R^7$ represents one or more kinds selected from a cyano group, a carboxy group, an ester group represented by -COOR$^9$ (R$^9$ represents an alkyl group having 1 to 10 carbon atoms or an aryl group having 6 to 20 carbon atoms), and an acid anhydride group.

$R^7$ can be an ester group represented by -COOR$^9$, and in this case, R$^9$ represents an alkyl group having 1 to 10 carbon atoms or an aryl group having 6 to 20 carbon atoms.

Examples of the alkyl group having 1 to 10 carbon atoms of R$^9$ include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

Examples of the aryl group having 6 to 20 carbon atoms of R$^9$ include a phenyl group, a tolyl group, a xylyl group, and a naphthyl group.

$R^7$ can be an acid anhydride group, and examples thereof include an acid anhydride group derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

Among these, $R^7$ is preferably a cyano group, a carboxy group, and -COOR$^9$ (R$^9$ represents an alkyl group having 1 to 10 carbon atoms or an aryl group having 6 to 20 carbon atoms), and more preferably a cyano group.

$R^8$ represents one or more kinds selected from a carboxy group, an ester group represented by -COOR$^{10}$ (R$^{10}$ represents an alkyl group having 1 to 10 carbon atoms, an aryl group having 6 to 20 carbon atoms, or a divalent or higher-valent linking group), and an acid anhydride group.

When $R^8$ is -COOR$^{10}$, R$^{10}$ represents an alkyl group having 1 to 10 carbon atoms, an aryl group having 6 to 20 carbon atoms, or a divalent or higher-valent linking group.

Examples of the alkyl group having 1 to 10 carbon atoms of R$^{10}$ include a methyl group, an ethyl group, an n-propyl group, an isopropyl group, an n-butyl group, an iso-butyl group, a sec-butyl group, a tert-butyl group, an n-pentyl group, an isopentyl group, a neopentyl group, and an n-hexyl group.

Examples of the aryl group having 6 to 20 carbon atoms of R$^{10}$ include a phenyl group, a tolyl group, a xylyl group, and a naphthyl group.

Examples of the divalent or higher-valent linking group of $R^{10}$ include a linking group derived from a dihydric or higher polyhydric alcohol such as ethylene glycol and glycerin. Specific examples of the compound in the case where $R^{10}$ is a divalent or higher-valent linking group include a compound obtained by esterifying ethylene glycol with two 2-cyanoacrylic acids (so-called "bifunctional cyanoacrylate") and a compound obtained by esterifying glycerin with three 2-cyanoacrylic acids (so-called "trifunctional cyanoacrylate").

Examples of the compound constituting the linking group include diols such as ethylene glycol, 1,3-propanediol, 1,2-butanediol, 1,4-butanediol, 1,6-hexanediol, 1,8-octanediol, 1,9-nonanediol, 1,10-decanediol, and 1,12-dodecanediol; and trihydric or higher polyhydric alcohols such as glycerin, pentaerythritol, trimethylolpropane, and sorbitol.

In the present invention, from the viewpoint of easy availability, the divalent or higher valent linking group is preferably a divalent or trivalent linking group.

$R^8$ can be an acid anhydride group, and examples thereof include an acid anhydride group derived from phthalic anhydride, maleic anhydride, trimellitic anhydride, pyromellitic anhydride, hexahydrophthalic anhydride, tetrahydrophthalic anhydride, methylnadic anhydride, nadic anhydride, glutaric anhydride, dimethylglutaric anhydride, diethylglutaric anhydride, succinic anhydride, methylhexahydrophthalic anhydride, and methyltetrahydrophthalic anhydride.

From the viewpoint of improving adhesiveness, $R^8$ is preferably a carboxy group and an ester group represented by -COOR$^{10}$ ($R^{10}$ represents an alkyl group having 1 to 10 carbon atoms, an aryl group having 6 to 20 carbon atoms, or a divalent or higher valent linking group), and is more preferably an ester group represented by -COOR$^{10}$ (in this case, $R^{10}$ represents an alkyl group having 1 to 6 carbon atoms or a divalent or trivalent linking group).

The polymerizable monomer (C) is preferably one or more kinds selected from 2-cyanoacrylic acid alkyl ester, 2-cyanopentadienoic acid alkyl ester, and methylidenemalonic acid dialkyl ester, more preferably one or more kinds selected from ethyl 2-cyanoacrylate, butyl 2-cyanoacrylate, and diethyl methylidenemalonate, and further more preferably ethyl 2-cyanoacrylate, from the viewpoint of improving the adhesive strength when the resin composition is used as an adhesive.

In the present invention, both the LUMO level of the 1,1-dicyanoethylene (A) and the LUMO level of the polymerizable monomer (C) are preferably -1.0 eV or less, more preferably -1.5 eV or less, and further more preferably -2.0 eV or less. When the energy is equal to or less than the upper limit value, the 1,1-dicyanoethylene (A) and the polymerizable monomer (C) are easily reacted.

The method for producing the polymerizable monomer (C) is not particularly limited, and it can be produced by a known method alone or in combination. In addition, as the polymerizable monomer (C), a commercially available product can be used, and examples thereof include ethyl 2-cyanoacrylate (manufactured by Sigma-Aldrich Japan K.K.).

<Content of Each Component>

It is preferable that the content of the 1,1-dicyanoethylene (A) in the total amount of the resin composition of the present invention is 1% by mass or more and 80% by mass or less,

> a content of the polymerizable monomer (B) is 1% by mass or more and 80% by mass or less, and
> the content of the polymerizable monomer (C) is 19% by mass or more and 98% by mass or less. The resin composition in which the content of each of the components is within the above range exhibits excellent adhesiveness while maintaining fast curability.

From the above viewpoint, the content of the 1,1-dicyanoethylene (A) in the total amount of the resin composition is preferably 2 to 60% by mass, more preferably 5 to 40% by mass, further more preferably 7 to 30% by mass, and still further more preferably 7 to 18% by mass.

Further, the content of the polymerizable monomer (B) in the total amount of the resin composition is preferably 2 to 60% by mass, more preferably 5 to 40% by mass, further more preferably 7 to 30% by mass, and still further more preferably 7 to 18% by mass.

Furthermore, the content of the polymerizable monomer (C) in the total amount of the resin composition is preferably 30 to 95% by mass, more preferably 40 to 90% by mass, further more preferably 50 to 85% by mass, and still further more preferably 62 to 88% by mass.

<Bronsted Acidic Compound>

The resin composition of the present invention preferably further contains a Bronsted acidic compound. When the resin composition of the present invention contains a Bronsted acidic compound, the storage stability of the resin composition is improved, and a desired curing rate can be obtained. More specifically, since 1,1-dicyanoethylene (A) is cured by a trace amount of water, it is preferable to completely remove water in the production process. However, since it is practically difficult to completely remove water, it is preferable to suppress curing (suppress the initiation of polymerization) by protonating water using a Bronsted acid.

From the viewpoint of storage stability and easy availability, examples of the Bronsted acidic compound that can be used in the present invention include inorganic acid, carboxylic acid, and organic sulfonic acid. Among these, one or more kinds selected from sulfuric acid, hydrochloric acid, nitric acid, acetic acid, benzenesulfonic acid, p-toluenesulfonic acid, and methanesulfonic acid are preferable, and a compound that reacts with water to produce a compound exhibiting Bronsted acidity, such as sulfur dioxide or diphosphorus pentoxide, can also be used.

When the resin composition of the present invention contains a Bronsted acidic compound, the content thereof is preferably 0.001 to 1.0% by mass, and more preferably 0.01 to 0.8% by mass, in the total amount of the resin composition. When the content of the Bronsted acidic compound is within the above range, the storage stability is improved.

From the viewpoint of storage stability, the content of the 1,1-dicyanoethylene (A) in the total amount of the resin composition is preferably 80% by mass or less, more preferably 50% by mass or less, further more preferably 30% by mass or less, and still further more preferably 10% by mass or less.

<Other Components>

The resin composition of the present invention can further contain other components such as a solvent, a filler, a thickener, an anti-aging agent, a plasticizer, a flame retardant, a stabilizer, and an antioxidant, in addition to the respective components.

When the resin composition of the present invention contains other components, the content thereof is preferably 0.001% by mass or more, and is preferably 10% by mass or less, and more preferably 3% by mass or less, in the total amount of the resin composition.

<Method for Producing Resin Composition>

The method for producing the resin composition of the present invention is not particularly limited, and for example, it can be produced by a production method including a mixing step of mixing 1,1-dicyanoethylene (A), the polymerizable monomer (B), the polymerizable monomer (C), and if necessary, other components, but is preferably produced in a dry atmosphere because the polymerization reaction proceeds due to water. Note that the method for mixing the respective components is not particularly limited, and the components can be mixed by a known method.

[Cured Product]

The cured product of the present invention is obtained by curing the above resin composition of the present invention with a Lewis basic compound, and more specifically, is a copolymer obtained by copolymerizing respective components in the resin composition using a Lewis basic compound as a catalyst.

<Lewis Basic Compound>

The Lewis basic compound used in the present invention is not particularly limited as long as it can be used as a polymerization catalyst, and for example, one or more kinds selected from water, alcohol and alkylamine can be used, and examples of the alcohol include methanol, ethanol and propanol.

Examples of the alkylamine include tertiary amine such as trimethylamine, triethylamine, tripropylamine, triisopropylamine, N,N-dimethylethylamine, N,N-dimethylpropylamine, and N,N-dimethylisopropylamine.

<Method for Producing Cured Product>

The method for producing the cured product is not particularly limited, and it can be obtained by mixing the resin composition of the present invention and the Lewis basic compound at room temperature (23°C). However, in general, the cured product can be obtained by a reaction between the resin composition of the present invention and water (Lewis basic compound) in the air.

The amount of the Lewis basic compound is not particularly limited, but is preferably from 0.001 to 1.0 parts by mass, and more preferably from 0.01 to 0.5 parts by mass, with respect to 100 parts by mass of the resin composition. When the content of the Lewis basic compound is within the above range, the resin composition rapidly reacts.

[Laminate and Method for Producing the Same]

The laminate of the present invention is a laminate having a layer containing the cured product, and the laminate structure is not particularly limited, but it is preferable to have the cured product between two adherend bodies. By having the cured product between two adherend bodies, the adherend bodies can be firmly bonded to each other.

The adherend body used in the laminate of the present invention is not particularly limited, and examples thereof include a synthetic resin, a metal, a ceramic, and a fabric.

Examples of the synthetic resin include a polyolefin resin such as a copolymer of polyethylene, polypropylene, or ethylene, and one or more kinds of α-olefin having 3 to 20 carbon atoms (for example, propylene, 1-butene, 1-pentene, and 1-hexene), an ethylenepropylene-diene copolymer (EPDM), an ethylene-vinyl acetate copolymer, and an ethylene-acrylic acid copolymer, a polyurethane resin, a polyamide resin, a polyester resin, and a polycarbonate resin.

Examples of the metal include a steel plate such as a stainless steel plate, a cold-rolled steel plate, and a galvanized steel plate.

The thickness of the adherend body constituting the laminate is not particularly limited. On the other hand, the thickness of the layer containing the cured product is preferably 0.01 to 2.0 mm, more preferably 0.015 to 1.5 mm, and further more preferably 0.02 to 1.2 mm, from the viewpoint of firmly bonding adherend bodies to each other.

The method for producing the laminate is not particularly limited, but it is preferably produced by the method for producing the laminate of the present invention including a bonding step of bonding a first adherend body and a second adherend body with the resin composition.

The method for bonding the first adherend body and the second adherend body with the resin composition is not particularly limited, but for example, they can be bonded by applying the resin composition to one adherend body, superposing the other adherend body thereon, and curing.

The method for applying the resin composition to the adherend body is not particularly limited, and examples thereof include a spin coating method, a spray coating method, a bar coating method, a knife coating method, a roll coating method, a roll knife coating method, a blade coating method, a die coating method, and a gravure coating method.

The application amount of the resin composition to the adherend body is not particularly limited, but is preferably 0.01 to 3.0 $\mu$L/mm$^2$, more preferably 0.05 to 2.5 $\mu$L/mm$^2$, and further more preferably 0.1 to 2.0 $\mu$L/mm$^2$. When the application amount is equal to or more than the above lower limit value, adherend bodies can be firmly bonded to each other. On the other hand, when the application amount is equal to or less than the above upper limit value, both can be adhered in an appropriate amount.

Example

Hereinafter, the present invention is described in detail with reference to Examples, but the present invention is not limited to these Examples.

The compounds used in Examples and Comparative Examples are as follows.

<1,1-Dicyanoethylene (A)>

1,1-dicyanoethylene

<Polymerizable Monomer (B)>

· 1-Hexene (manufactured by Tokyo Chemical Industry Co., Ltd.)
· Dodecyl methacrylate (manufactured by Tokyo Chemical Industry Co., Ltd.)
· Vinyl acetate (manufactured by Tokyo Chemical Industry Co., Ltd.)
· Styrene (manufactured by Tokyo Chemical Industry Co., Ltd.)

Note that, in Table 2, 1-hexene was represented by (B1), and other polymerizable monomers (B) were represented by (B2).

<Polymerizable Monomer (C)>

Ethyl 2-cyanoacrylate (manufactured by Sigma-Aldrich Japan K.K.)
Butyl 2-cyanoacrylate (manufactured by United States Biological)
Diethyl methylidenemalonate (manufactured by FUJIFILM Wako Pure Chemical Corporation)

<Materials for Laminate>

- HDPE plate (manufactured by Standard Test Piece, length of 25 mm, width of 100 mm, thickness of 2.0 mm)
- Steel plate (manufactured by Standard Test Piece, length of 25 mm, width of 100 mm, thickness of 1.6 mm)

<Method for Measuring Energy Level>

The energy levels of 1,1-dicyanoethylene (A), the polymerizable monomer (B), and the polymerizable monomer (C) were calculated by a quantum chemical calculation program, Gaussiann 16W(Gaussian 16, Revision A.03, M. J. Frisch, G. W. Trucks, H. B. Schlegel, G. E. Scuseria, M. A. Robb, J. R. Cheeseman, G. Scalmani, V. Barone, G. A. Petersson, H. Nakatsuji, X. Li, M. Caricato, A. V. Marenich, J. Bloino, B. G. Janesko, R. Gomperts, B. Mennucci, H. P. Hratchian, J. V. Ortiz, A. F. Izmaylov, J. L. Sonnenberg, D. Williams-Young, F. Ding, F. Lipparini, F. Egidi, J. Goings, B. Peng, A. Petrone, T. Henderson, D. Ranasinghe, V. G. Zakrzewski, J. Gao, N. Rega, G. Zheng, W. Liang, M. Hada, M. Ehara, K. Toyota, R. Fukuda, J. Hasegawa, M. Ishida, T. Nakajima, Y. Honda, O. Kitao, H. Nakai, T. Vreven, K. Throssell, J. A. Montgomery, Jr., J. E. Peralta, F. Ogliaro, M. J. Bearpark, J. J. Heyd, E. N. Brothers, K. N. Kudin, V. N. Staroverov, T. A. Keith, R. Kobayashi, J. Normand, K. Raghavachari, A. P. Rendell, J. C. Burant, S. S. Iyengar, J. Tomasi, M. Cossi, J. M. Millam, M. Klene, C. Adamo, R. Cammi, J. W. Ochterski, R. L. Martin, K. Morokuma, O. Farkas, J. B. Foresman, and D. J. Fox, Gaussian, Inc., Wallingford CT, 2016.).

DFT was used as a calculation method, and B3LYP was used as a functional. The structure was optimized using 6-31+G (d, p) as a basis function, and the energy levels of HOMO-1, HOMO, and LUMO were calculated by performing single-point energy calculation on the structure having the minimum formation energy using 6-311++G (3d, 2p).

[HOMO-LUMO Energy Level Difference]

The HOMO-LUMO energy level difference was calculated by the following formula (X).

$$\text{General Formula (X): LUMO (Acceptor) - HOMO (Doner)}$$

The above LUMO (Acceptor) represents the "energy level of the lowest unoccupied molecular orbital level" of 1,1-dicyanoethylene (A) having an electron-withdrawing substituent group.

The above HOMO (Doner) represents the "energy level of the highest occupied molecular orbital" or the "energy level of the occupied molecular orbital one below the highest occupied molecular orbital when the highest occupied molecular orbital is an unshared electron pair" of the polymerizable monomer (B).

<Method for Evaluating Storage Stability>

Resin compositions prepared in accordance with the formulations described in Examples and Comparative Examples were allowed to stand in a test environment at a temperature of 50°C and a humidity of 50% for 3 hours, and the presence or absence of generation of precipitate was confirmed to evaluate the storage stability.

<Example 1>

Under dry nitrogen gas, 0.5 g of 1,1-dicyanoethylene (A), 9.0 g of ethyl 2-cyanoacrylate (polymerizable monomer (C)), and 0.5 g of 1-hexene (polymerizable monomer (B)) that was subjected to a dehydration treatment were mixed to prepare a resin composition. This resin composition was evaluated according to JIS K6861:1995. Specifically, 100 μL of the obtained resin composition was applied to a range of 12.5 mm × 25 mm of the HDPE plate, and another HDPE plate was superposed on the applied surface. Thereafter, the two HDPE plates were allowed to stand in an environment of room temperature (23°C) and a humidity of 50% RH to cure the resin composition with the base material and/or water in the air for 1 day, thereby bonding them to obtain a laminate. Next, the tensile shear adhesive strength of the obtained laminate was measured at a tensile speed of 20 mm/min using a universal material tester Type: 5969 (manufactured by Instron). The results are shown in Table 1.

<Examples 2 to 13 and Comparative Examples 1 to 12>

Laminates were prepared in the same manner as in Example 1 except that the resin compositions were prepared according to the formulation described in Tables 1 to 3 and the adherend bodies described in Tables 1 to 3 were used, and the tensile shear adhesive strength was measured. The results are shown in Tables 1 to 3.

<Examples 14 to 17>

The resin compositions prepared according to the formulation described in Table 4 were allowed to stand in a test environment at a temperature of 50°C and a humidity of 50% for 3 hours to mix water in the air, and the storage stability was evaluated by confirming the presence or absence of generation of precipitate. The results are shown in Table 4.

Table 1

|  |  |  | Examples | | | Comparative Examples | | | | |
|---|---|---|---|---|---|---|---|---|---|---|
|  |  |  | 1 | 2 | 3 | 1 | 2 | 3 | 4 | 5 |
| Formulation (Part(s) by Mass) | (-A) | 1,1-Dicyanoethylene | 5 | 10 | 20 | 100 | 99 | 90 | - | - |
|  | (-B) | 1-Hexene | 5 | 10 | 20 | - | 1 | 10 | 10 | - |
|  | (-C) | Ethyl 2-Cyanoacrylate | 90 | 80 | 60 | - | - | - | 90 | 100 |
| LUMO Energy Level (eV) of (A) | | | -3.27 | -3.27 | -3.27 | -3.27 | -3.27 | -3.27 | - | -3.27 |
| HOMO Energy Level (eV) of (B) | | | -7.09 | -7.09 | -7.09 | - | -7.09 | -7.09 | -7.09 | - |
| LUMO Energy Level (eV) of (C) | | | -2.70 | -2.70 | -2.70 | - | - | - | -2.70 | -2.70 |
| Energy Level Difference (eV) between (A) and (B) | | | 3.82 | 3.82 | 3.82 | - | 3.82 | 3.82 | - | - |
| Condition | Adherend Body (1) | | HDPE Plate | | | HDPE Plate | | | | |
|  | Adherend Body (2) | | HDPE Plate | | | HDPE Plate | | | | |
| Evaluation | Tensile Shear Adhesive Strength [MPa] | | 0.82 | 0.98 | 0.47 | 0.32 | 0.19 | 0.18 | 0.30 | 0.20 |

Table 2

| Formulation (Part(s) by Mass) | | | | Examples | | | | | | | | | |
|---|---|---|---|---|---|---|---|---|---|---|---|---|---|
| | | | | 4 | 5 | 6 | 7 | 8 | 9 | 10 | 11 | 12 | 13 |
| Formulation (Part(s) by Mass) | (A) | | 1,1-Dicyanoethylene | 10 | 5 | 5 | 5 | 5 | 5 | 30 | 50 | 50 | 50 |
| | (B1) | | 1-Hexene | 10 | 5 | 5 | 5 | 5 | 5 | 10 | 10 | 10 | 10 |
| | (B2) | | Dodecyl Methacrylate | - | 5 | - | - | - | - | - | - | - | - |
| | | | Vinyl Acetate | - | - | 5 | - | - | - | - | - | - | - |
| | | | Styrene | - | - | - | 5 | - | - | - | - | - | - |
| | | | Methyl Methacrylate | - | - | - | - | 5 | - | - | - | - | - |
| | | | Methyl Acrylate | - | - | - | - | - | 5 | - | - | - | - |
| | (C) | | Ethyl 2-Cyanoacrylate | 80 | 85 | 85 | 85 | 85 | 85 | 60 | 40 | - | - |
| | | | Butyl 2-Cyanoacrylate | - | - | - | - | - | - | - | - | 40 | - |
| | | | Diethyl Methylidenemalonate | - | - | - | - | - | - | - | - | - | 40 |
| LUMO Energy Level (eV) of (A) | | | | -3.27 | -3.27 | -3.27 | -3.27 | -3.27 | -3.27 | -3.27 | -3.27 | -3.27 | -3.27 |
| HOMO Energy Level (eV) of (B1) | | | | -7.09 | -7.09 | -7.09 | -7.09 | -7.09 | -7.09 | -7.09 | -7.09 | -7.09 | -7.09 |
| HOMO Energy Level (eV) of (B2) | | | | - | -7.60 | -7.19 | -6.39 | -7.60 | -7.84 | - | - | - | - |
| LUMO Energy Level (eV) of (C) | | | | -2.70 | -2.70 | -2.70 | -2.70 | -2.70 | -2.70 | -2.70 | -2.70 | -2.70 | -2.00 |
| Energy Level Difference (eV) between (A) and (B1) | | | | 3.82 | 3.82 | 3.82 | 3.82 | 3.82 | 3.82 | 3.82 | 3.82 | 3.82 | 3.82 |
| Energy Level Difference (eV) between (A) and (B2) | | | | - | 4.33 | 3.92 | 3.12 | 4.33 | 4.57 | - | - | - | - |
| Condition | Adherend Body (1) | | | Steel Plate | | | | | | | | | |
| | Adherend Body (2) | | | HDPE Plate | | | | | | | | | |
| Evaluation | Tensile Shear Adhesive Strength [MPa] | | | 2.23 | 1.60 | 1.84 | 1.90 | 1.58 | 1.35 | 1.30 | 1.24 | 1.55 | 1.03 |

Table 3

| | | | | Comparative Examples | | | | | | |
|---|---|---|---|---|---|---|---|---|---|---|
| | | | | 6 | 7 | 8 | 9 | 10 | 11 | 12 |
| Formulation (Part(s) by Mass) | | (A) | 1,1-Dicyanoethylene | 100 | - | - | - | - | - | - |
| | | (B1) | 1-Hexene | - | - | - | - | - | - | - |
| | | (B2) | Dodecyl Methacrylate | - | - | 5 | - | - | - | - |
| | | | Vinyl Acetate | - | - | - | 5 | - | - | - |
| | | | Styrene | - | - | - | - | 5 | - | - |
| | | | Methyl Methacrylate | - | - | - | - | - | - | - |
| | | | Methyl Acrylate | - | - | - | - | - | - | - |
| | | (C) | Ethyl 2-Cyanoacrylate | - | 100 | 95 | 95 | 95 | - | - |
| | | | Butyl 2-Cyanoacrylate | - | - | - | - | - | 100 | - |
| | | | Diethyl Methylidenemalonate | - | - | - | - | - | - | 100 |
| LUMO Energy Level (eV) of (A) | | | | -3.27 | - | - | - | - | - | - |
| HOMO Energy Level (eV) of (B1) | | | | - | - | - | - | - | - | - |
| HOMO Energy Level (eV) of (B2) | | | | - | - | -7.60 | -7.19 | -6.39 | - | - |
| LUMO Energy Level (eV) of (C) | | | | - | -2.70 | -2.70 | -2.70 | -2.70 | -2.70 | -2.00 |
| Energy Level Difference (eV) between (A) and (B1) | | | | - | - | - | - | - | - | - |
| Energy Level Difference (eV) between (A) and (B2) | | | | - | - | - | - | - | - | - |
| Condition | | Adherend Body (1) | | Steel Plate | | | | | | |
| | | Adherend Body (2) | | HDPE Plate | | | | | | |
| Evaluation | | Tensile Shear Adhesive Strength [MPa] | | 0.85 | 0.95 | 0.75 | 0.80 | 0.89 | 0.60 | Not Cured |

Table 4

| | | | | Examples | | | |
|---|---|---|---|---|---|---|---|
| | | | | 14 | 15 | 16 | 17 |
| Formulation (Part(s) by Mass) | | (A) | 1,1-Dicyanoethylene | 5 | 10 | 5 | 10 |
| | | (B) | 1-Hexene | 5 | 10 | 5 | 10 |
| | | (-C) | Ethyl 2-Cyanoacrylate | 90 | 80 | 90 | 80 |
| Bronsted Acidic Compound (% by Mass) | | Methanesulfonic Acid | | 0.1 | 0.1 | - | - |
| Evaluation | | Presence or Absence of Precipitate After Evaluation of Storage Stability | | Absent | Absent | Present | Present |

As is clear from the results of Tables 1 to 3, it is found that the resin composition of the present invention is excellent in adhesive strength. Further, from the results of Table 4, it is found that the resin composition of the present invention is also excellent in storage stability.

**Claims**

1.  A resin composition comprising: 1,1-dicyanoethylene (A), a polymerizable monomer (B) represented by general formula (I) below, and a polymerizable monomer (C) represented by general formula (II) below:

    $$CH_2=CR^1R^2 \qquad (I)$$

    $$CHR^6=CR^7R^8 \qquad (II)$$

    wherein, in the general formula (I), $R^1$ represents one or more kinds selected from a hydrogen atom, an alkyl group, a cycloalkyl group, an aryl group, an alkoxy group, and a halogen atom,
    $R^2$ represents one or more kinds selected from a hydrogen atom, an alkyl group, an alkenyl group, a cycloalkyl group, an aryl group, an alkoxy group, a carboxy group, an ester group represented by -COOR$^3$, in which $R^3$ represents an alkyl group having 1 to 12 carbon atoms, an acid anhydride group, an acyl group represented by -COR$^4$, in which $R^4$ represents an alkyl group having 1 to 12 carbon atoms, an acyloxy group represented by -OCOR$^5$, in which $R^5$ represents an alkyl group having 1 to 12 carbon atoms, a halogen atom, and a haloalkyl group;
    further, in the general formula (II), $R^6$ represents one or more kinds selected from a hydrogen atom, an alkyl group, an alkenyl group, and an alkoxy group;
    $R^7$ represents one or more kinds selected from a cyano group, a carboxy group, an ester group represented by -COOR$^9$, in which $R^9$ represents an alkyl group having 1 to 10 carbon atoms or an aryl group having 6 to 20 carbon atoms, and an acid anhydride group; and
    $R^8$ represents one or more kinds selected from a carboxy group, an ester group represented by -COOR$^{10}$, in which $R^{10}$ represents an alkyl group having 1 to 10 carbon atoms, an aryl group having 6 to 20 carbon atoms, or a divalent or higher-valent linking group, and an acid anhydride group.

2.  The resin composition according to Claim 1, wherein an energy difference between a LUMO energy level of the 1,1-dicyanoethylene (A) and a HOMO energy level of the polymerizable monomer (B) is less than 4.40 eV.

3.  The resin composition according to Claim 1 or 2, wherein the polymerizable monomer (B) is one or more kinds selected from ethylene, propylene, butadiene, isobutylene, isoprene, 1-hexene, 1-octene, vinyl acetate, styrene, methyl methacrylate, and dodecyl methacrylate.

4.  The resin composition according to any one of Claims 1 to 3, wherein the polymerizable monomer (C) is one or more kinds selected from 2-cyanoacrylic acid alkyl ester, 2-cyanopentadienoic acid alkyl ester, and methylidenemalonic acid dialkyl ester.

5.  The resin composition according to any one of Claims 1 to 4, wherein a content of the 1,1-dicyanoethylene (A) in a total amount of the resin composition is 1% by mass or more and 80% by mass or less,

    a content of the polymerizable monomer (B) is 1% by mass or more and 80% by mass or less, and
    a content of the polymerizable monomer (C) is 19% by mass or more and 98% by mass or less.

6.  The resin composition according to any one of Claims 1 to 5, further comprising a Bronsted acidic compound.

7.  A cured product obtained by curing the resin composition according to any one of Claims 1 to 6 with a Lewis basic compound.

8.  A laminate comprising a layer containing the cured product according to Claim 7.

9.  A method for producing a laminate, the method comprising a bonding step of bonding a first adherend body and a second adherend body with the resin composition according to any one of Claims 1 to 6.

## INTERNATIONAL SEARCH REPORT

| International application No. |
|---|
| **PCT/JP2023/018355** |

**A.    CLASSIFICATION OF SUBJECT MATTER**

*C08F 222/30*(2006.01)i; *C08F 2/40*(2006.01)i
FI:    C08F222/30; C08F2/40

According to International Patent Classification (IPC) or to both national classification and IPC

**B.    FIELDS SEARCHED**

Minimum documentation searched (classification system followed by classification symbols)

C08F222/30; C08F2/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| A | JP 1-103614 A (MITSUBISHI PETROCHEM. CO., LTD.) 20 April 1989 (1989-04-20) entire text | 1-9 |
| A | JP 2019-512567 A (HENKEL IP & HOLDING GMBH) 16 May 2019 (2019-05-16) entire text | 1-9 |
| A | JP 48-9466 B1 (TORAY INDUSTRIES, INC.) 24 March 1973 (1973-03-24) entire text | 1-9 |
| A | JP 52-72734 A (TOAGOSEI CHEMICAL INDUSTRY CO., LTD.) 17 June 1977 (1977-06-17) entire text | 1-9 |
| A | JP 63-277218 A (TOPPAN PRINTING CO., LTD.) 15 November 1988 (1988-11-15) entire text | 1-9 |

☐ Further documents are listed in the continuation of Box C.        ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **04 July 2023** | **11 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/018355**

| Patent document cited in search report | | | Publication date (day/month/year) | Patent family member(s) | | | Publication date (day/month/year) |
|---|---|---|---|---|---|---|---|
| JP | 1-103614 | A | 20 April 1989 | EP entire text | 264240 | A2 | |
| JP | 2019-512567 | A | 16 May 2019 | WO entire text | 2017/151711 | A1 | |
| JP | 48-9466 | B1 | 24 March 1973 | (Family: none) | | | |
| JP | 52-72734 | A | 17 June 1977 | (Family: none) | | | |
| JP | 63-277218 | A | 15 November 1988 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003041200 A
- JP H01103614 A
- US 2476270 B

**Non-patent literature cited in the description**

- *J. Am. Chem. Soc.*, 1989, vol. 111, 9078-9081